# EUROPEAN PATENT APPLICATION

(11) **EP 2 996 303 A1**
(43) Date of publication of application: **16.03.2016**
(21) Application number: 14803900.1
(22) Date of filing: 06.05.2014
(51) Int. Cl.: H04L 29/06

(54) **INPUT PARAMETER GENERATION METHOD AND DEVICE**

(30) Priority: 31.05.2013 CN 201310213602
(71) Applicant: Huawei Technologies Co., Ltd., Longgang District Shenzhen, Guangdong 518129 (CN)
(72) Inventor: ZHENG, Hewen, Shenzhen Guangdong 518129 (CN)
(74) Representative: Epping - Hermann - Fischer
(86) International application number: PCT/CN2014/076856
(87) International publication number: WO 2014/190843

(57) **Abstract**

Embodiments of the present invention provide a method for generating an input parameter and a device. The method for generating an input parameter according to the embodiments of the present invention includes: receiving, by a first network device, a packet; determining, by the first network device according to an identifier of a first packet header in a rule set, whether the packet includes the first packet header, where the rule set includes a first rule, the first rule includes the identifier of the first packet header and first operation information, and the first operation information includes extracting a first parameter from the first packet header; extracting, by the first network device, the first parameter from the first packet header when the packet includes the first packet header; and determining, by the first network device, an input parameter according to the first parameter. In this way, an input parameter of a packet is flexibly extracted, adapting to different packet formats.

## Description

### TECHNICAL FIELD

Embodiments of the present invention relate to communications technologies, and in particular, to a method for generating an input parameter and a device.

### BACKGROUND

With the continuous development of communications technologies, an increasingly high communication rate is required. Optical communication is a data communication manner that is widely used currently, and for a high-speed network device interface, communication connection between network devices is generally implemented by using a line mode in which an optical module connects to an optical fiber. Because a big difference exists between prices of optical modules with different rates (a high-speed optical module is much more expensive than a low-speed optical module), in the prior art, connection between network devices is usually implemented by using high-density low-speed lines.

There are generally multiple links between two network devices for data transmission. In order to balance load of the links, in the prior art, an application-specific integrated circuit (Application Specific Integrated Circuit, ASIC for short) is widely used to implement parameter extraction and calculation for load balancing, which are specifically extracting an outmost quintuple of a packet flow as an input parameter for load balancing and performing load balancing calculation, and allocating, according to a calculation result, the received packet flow to a corresponding link for transmission.

As tunneling is widely used, multiple packet flows may exist over one tunnel, and packet flows over a same tunnel have a same outmost packet header, and may have different inner packet headers. However, in the prior art, an outmost quintuple of a packet flow is used as an input parameter to allocate a link to the packet flow, and when the input parameter of the packet flow is extracted, another factor is not considered. Therefore, the existing method for extracting an input parameter of a packet flow is not flexible enough.

### SUMMARY

Embodiments of the present invention provide a method for generating an input parameter and a device, so as to flexibly extract an input parameter of a packet.

According to a first aspect, an embodiment of the present invention provides a method for generating an input parameter, including:
receiving, by a first network device, a packet;
determining, according to an identifier of a first packet header in a rule set, whether the packet includes the first packet header, where the rule set includes a first rule, the first rule includes the identifier of the first packet header and first operation information, and the first operation information includes extracting a first parameter from the first packet header;
extracting the first parameter from the first packet header when the packet includes the first packet header; and
determining an input parameter according to the first parameter.

In a first possible implementation manner of the first aspect, the rule set is stored in the first network device, or the rule set is stored in a second network device.

According to the first possible implementation manner of the first aspect, in a second possible implementation manner, when the rule set is stored in the first network device, before the determining, according to an identifier of a first packet header in a rule set, whether the packet includes the first packet header, the method further includes: receiving, by the first network device, the rule set from a third network device.

With reference to the first aspect to the second possible implementation manner, in a third possible implementation manner, the rule set further includes a second rule, the second rule includes an identifier of a second packet header and second operation information, and the second operation information includes extracting a second parameter from the second packet header; and
the method further includes:
determining, according to the identifier of the second packet header in the rule set, whether the packet includes the second packet header; and
when the packet includes the second packet header, extracting the second parameter from the second packet header.

According to the third possible implementation manner of the first aspect, in a fourth possible implementation manner, the determining an input parameter according to the first parameter includes:
combining the first parameter and the second parameter to obtain the input parameter.

With reference to the first aspect to the second possible implementation manner, in a fifth possible implementation manner, the determining an input parameter according to the first parameter includes:
determining the first parameter as the input parameter.

According to a second aspect, an embodiment of the present invention provides a network device, including a receiving module and a processing module, where
the receiving module is configured to receive a packet; and
the processing module is configured to: determine, according to an identifier of a first packet header in a rule set, whether the packet includes the first packet header, where the rule set includes a first rule, the first rule includes the identifier of the first packet header and first operation information, and the first operation information includes extracting a first parameter from the first packet header;
extract the first parameter from the first packet header when the packet includes the first packet header; and
determine an input parameter according to the first parameter.

In a first possible implementation manner of the second aspect, the network device further includes:
a storage module, configured to store the rule set.

According to the first possible implementation manner of the second aspect, in a second possible implementation manner, the receiving module is further configured to receive the rule set.

With reference to the second aspect to the second possible implementation manner, in a third possible implementation manner, the rule set further includes a second rule, the second rule includes an identifier of a second packet header and second operation information, and the second operation information includes extracting a second parameter from the second packet header; and
the processing module is further configured to:
determine, according to the identifier of the second packet header in the rule set, whether the packet includes the second packet header; and when the packet includes the second packet header, extract the second parameter from the second packet header.

According to the third possible implementation manner of the second aspect, in a fourth possible implementation manner, the processing module is specifically configured to:
combine the first parameter and the second parameter to obtain the input parameter.

With reference to the second aspect to the second possible implementation manner, in a fifth possible implementation manner, the processing module is specifically configured to:
determine the first parameter as the input parameter.

According to the method for generating an input parameter and the device that are provided in the embodiments of the present invention, a network device receives a packet; determines, according to an identifier of a first packet header in a rule set, whether the packet includes the first packet header; extracts a first parameter from the first packet header when the packet includes the first packet header; and determines an input parameter according to the first parameter. In this way, the input parameter of the packet is flexibly extracted, adapting to different packet formats.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of a method for generating an input parameter according to an embodiment of the present invention;
FIG. 2 is a flowchart of a method for generating an input parameter according to an embodiment of the present invention;
FIG. 3 is a schematic diagram of obtaining an input parameter according to a rule according to an embodiment of the present invention;
FIG. 4 is a schematic diagram of a user-defined packet format according to an embodiment of the present invention;
FIG. 5 is a schematic diagram of configuring a rule set for a network device by an OSS according to an embodiment of the present invention;
FIG. 6 is a schematic diagram of generating an input parameter according to a rule according to an embodiment of the present invention; and
FIG. 7 is a schematic structural diagram of a network device 10 according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

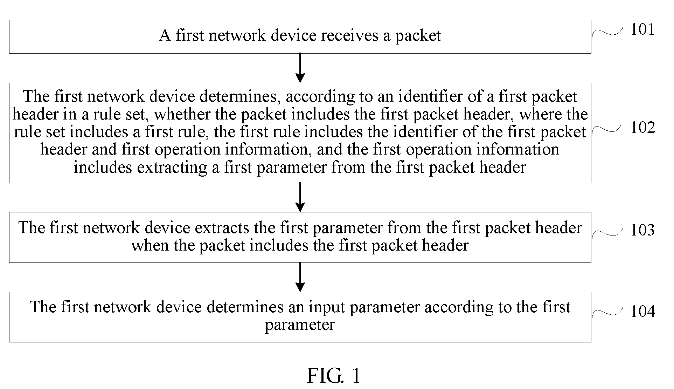

FIG. 1 is a flowchart of a method for generating an input parameter according to an embodiment of the present invention. As shown in FIG. 1, the method of this embodiment may include:
Step 101: A first network device receives a packet.
Step 102: The first network device determines, according to an identifier of a first packet header in a rule set, whether the packet includes the first packet header, where the rule set includes a first rule, the first rule includes the identifier of the first packet header and first operation information, and the first operation information includes extracting a first parameter from the first packet header.

One implementation scenario may be that: the rule set is prestored in the first network device, that is, the rule set is locally stored in the first network device; or the rule set is prestored in a second network device, and the first network device may read the rule set from the second network device by accessing the second network device, where the second network device may be, for example, a router. Another implementation scenario may be that: the first network device receives the rule set from a third network device, where the third network device may be specifically an operation support system (Operation Support System, OSS for short).

The rule set includes identifiers of packet headers, to identify different types of packet headers, that is, the first network device may determine, according to the identifier of the first packet header in the rule set, whether the packet includes the first packet header, and when the packet includes the first packet header: if the first packet header is a packet header of an Ethernet packet, that is, an Ethernet header, first operation information corresponding to the first packet header is acquiring a source MAC address and/or a destination MAC address of the Ethernet packet as the first parameter; if the first packet header is a packet header of an IP packet, that is, an IP header, the first operation information corresponding to the first packet header is acquiring a source IP address and/or a destination IP address of the IP packet as the first parameter; if the first packet header is a packet header of a TCP packet, that is, a TCP header, or a packet header of a UDP packet, that is, a UDP header, the first operation information corresponding to the first packet header is acquiring source port information and/or destination port information of the TCP packet or the UDP packet as the first parameter; if the first packet header is a packet header of a GRE packet, that is, a GRE header, or a packet header of a VXLAN packet, that is, a VXLAN header, or a packet header of an NVGRE packet, that is, an NVGRE packet, the first operation information corresponding to the first packet header is acquiring a source MAC address, and/or a destination MAC address, and/or a source IP address, and/or a destination IP address of inner payload of the GRE packet, the VXLAN packet, or the NVGRE packet as the first parameter; or if the first packet header is a packet header of a GTP packet, that is, a GTP header, the first operation information corresponding to the first packet header is acquiring a source IP address, and/or a destination IP address, and/or source port information, and/or destination port information of inner payload of the GTP packet as the first parameter.

Step 103: The first network device extracts the first parameter from the first packet header when the packet includes the first packet header.

If the packet includes the first packet header, the first network device extracts the first parameter from the first packet header according to the first operation information; if the packet does not include the first packet header, the first network device may extract a parameter of the packet as an input parameter according to a default rule.

Step 104: The first network device determines an input parameter according to the first parameter.

In one feasible manner, if the rule set includes the identifier of the first packet header, the first network device extracts the first parameter from the first packet header, and determines the first parameter as the input parameter.

Further, the rule set may further include a second rule, the second rule includes an identifier of a second packet header and second operation information, and the second operation information may include extracting a second parameter from the second packet header. If the rule set includes the second rule, correspondingly, after step 102 or step 103, the first network device may determine, according to the identifier of the second packet header in the rule set, whether the packet includes the second packet header; and when the packet includes the second packet header, the first network device extracts the second parameter from the second packet header. For a process of extracting the second parameter, reference may be made to the process of extracting the first parameter, and details are not described herein again.

Correspondingly, in this step, the determining, by the first network device, an input parameter according to the first parameter may be: combining, by the first network device, the first parameter and the second parameter to obtain the input parameter. The combining the first parameter and the second parameter may be directly combining the first parameter and the second parameter, so as to obtain the input parameter. For example, the first parameter is 1010, the second parameter is 1111, and then a result obtained through direct combination may be 10101111 or 11111010. In addition, the combining the first parameter and the second parameter may also be separately preprocessing the first parameter and/or the second parameter, and then combining the preprocessed parameters. For example, cyclic redundancy check (Cyclic Redundancy Check, CRC for short) processing or exclusive OR operation is performed on the first parameter and the second parameter to obtain the processed first parameter and the processed second parameter, and then the processed first parameter and the processed second parameter are combined, so as to obtain the input parameter. A manner for combining parameters is not limited in this embodiment.

According to the method for generating an input parameter provided in this embodiment of the present invention, a network device receives a packet; determines, according to an identifier of a first packet header in a rule set, whether the packet includes the first packet header; extracts a first parameter from the first packet header when the packet includes the first packet header; and determines an input parameter according to the first parameter. In this way, the input parameter of the packet can be flexibly extracted, adapting to different packet formats when the input parameter is generated.

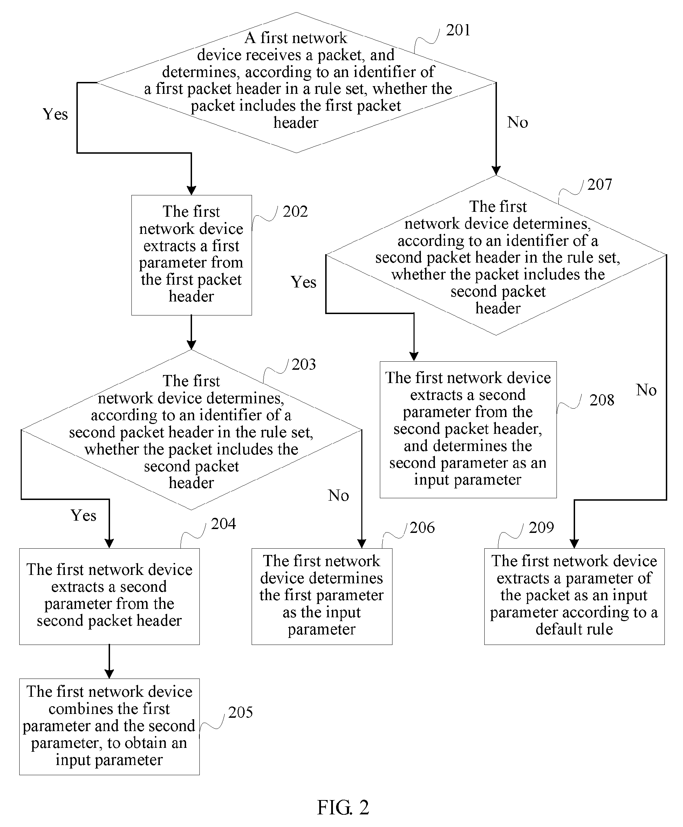

Based on the foregoing embodiment, in this embodiment, the method for generating an input parameter is described by using an example in which the rule set includes the first rule and the second rule. As shown in FIG. 2, FIG. 2 is a flowchart of a method for generating an input parameter according to an embodiment of the present invention. The method provided in this embodiment may include:
Step 201: A first network device receives a packet, and determines, according to an identifier of a first packet header in a rule set, whether the packet includes the first packet header. If yes, step 202 is performed; if not, step 207 is performed.
Step 202: The first network device extracts a first parameter from the first packet header.
Step 203: The first network device determines, according to an identifier of a second packet header in the rule set, whether the packet includes the second packet header. If yes, step 204 is performed; if not, step 206 is performed.
Step 204: The first network device extracts a second parameter from the second packet header.
Step 205: The first network device combines the first parameter and the second parameter to obtain an input parameter, and the process of generating an input parameter ends.
Step 206: The first network device determines the first parameter as an input parameter, and the process of generating an input parameter ends.
Step 207: The first network device determines, according to an identifier of a second packet header in the rule set, whether the packet includes the second packet header. If yes, step 208 is performed; if not, step 209 is performed.
Step 208: The first network device extracts a second parameter from the second packet header, and determines the second parameter as an input parameter, and the process of generating a parameter ends.
Step 209: The first network device extracts a parameter of the packet as an input parameter according to a default rule, and the process of generating an input parameter ends.

In this embodiment, an input parameter of a packet can be flexibly extracted, adapting to different packet formats when the input parameter is generated.

An application scenario of the method for generating an input parameter provided in this embodiment of the present invention may include: the first network device stores the rule set, that is, the rule set is preconfigured for a network device; or the rule set is prestored in a second network device, and the first network device may read the rule set from the second network device by accessing the second network device; an OSS delivers a packet format definition to a network device; or a third network device sends the rule set to the first network device, that is, an OSS configures the rule set for a network device, which is not limited in this embodiment. The method for generating an input parameter provided in this embodiment is described below in detail by using an example in which the rule set is preconfigured for a network device.

First, a rule set is preconfigured for a network device. As shown in Table 1, Table 1 is a list of operation information for different packet headers. The rule set may include at least one rule, which is not limited only to a first rule and a second rule. Specifically, in the rule set, different packets are described by using the at least one rule, each rule describes a single packet or a set of packets, for example, all packet flows over a VXLAN tunnel and all packet flows over an NVGRE tunnel, and then a configured rule is applied to a port of the network device.

The rule set may include any one or a combination of the following rules:
a first rule "key Ethernet src-mac1 dst-mac1": for an Ethernet Ethernet packet, extract a source Media Access Control (Media Access Control, MAC for short) address and/or a destination MAC address as a first parameter key1;
a second rule "key ip src-ip1 dst-ip1": for an Internet Protocol (Internet Protocol, IP for short) packet, extract a source IP address and/or a destination IP address as a second parameter key2;
a third rule "key vxlan vni": for a virtual extensible local area network (Virtual extensible Local Area Network, VXLAN for short) packet, extract a value of a "VNI" field as a third parameter key3;
a fourth rule "key vxlan src-mac2 dst-mac2": for a VXLAN packet, extract a source MAC address and/or a destination MAC address in an Ethernet header in payload of the VXLAN packet as a fourth parameter key4;
a fifth rule "key vxlan src-ip2 dst-ip2": for a VXLAN packet, extract a source IP address and/or a destination IP address in an Ethernet header of inner payload of the VXLAN packet as a fifth parameter key5;
a sixth rule "key nvgre vsid": for a network virtualization using generic routing encapsulation (Network Virtualization using Generic Routing Encapsulation, NVGRE for short) packet, extract a value of a "VSID" field as a sixth parameter key6;
a seventh rule "key nvgre src-mac2 dst-mac2": for an NVGRE packet, extract a source MAC address and/or a destination MAC address in an Ethernet header of inner payload of the NVGRE packet as a seventh parameter key7;
an eighth rule "key nvgre src-ip2 dst-ip2": for an NVGRE packet, extract a source IP address and/or a destination IP address in an Ethernet header of inner payload of the NVGRE packet as an eighth parameter key8;
a ninth rule "key gtp teid": for a general packet radio service Tunneling Protocol (GPRS Tunneling Protocol, GTP for short) packet, extract a value of a "TEID" field as a ninth parameter key9; and
a tenth rule "key nvgre src-ip2 dst-ip2": for a GTP packet, extract a source IP address and/or a destination IP address in an Ethernet header of inner payload of the GTP packet as a tenth parameter key10.

After the port of the network device to which the rule set is applied receives a packet, matching is performed between an identifier of a packet header of the packet and the foregoing ten rules. If the identifier of the packet header of the packet matches any one of the foregoing ten rules, a parameter is extracted from the packet header of the packet according to operation information in a corresponding rule, and an input parameter is determined according to the extracted parameter.

For example, in Table 1, a first rule in a rule set "wan1" is "key Ethernet src-mac1 dst-mac1", that is, for an Ethernet packet, a source MAC address ("src-mac1") and a destination MAC address ("dst-mac1") are extracted as an input parameter. In this case, if the received packet is an Ethernet packet, a source MAC address and a destination IP address of the packet are extracted as the input parameter.

**Table 1**

| **wan1** | **Parameter of a packet** |
|---|---|
| key Ethernet src-mac1 dst-mac1 | Extract a source MAC address and/or a destination MAC address |
| key ip src-ip1 dst-ip1 | a source IP address and/or a destination IP address |
| key vxlan vni | Extract a value of a "VNI" field |
| key vxlan src-mac2 dst-mac2 | Extract a source MAC address and/or a destination MAC address in an Ethernet header of inner payload of a VXLAN packet |
| key vxlan src-ip2 dst-ip2 | Extract a source IP address and/or a destination IP address in an Ethernet header of inner payload of a VXLAN packet |
| key nvgre vsid | Extract a value of a "VSID" field |
| key nvgre src-mac2 dst-mac2 | Extract a source MAC address and/or a destination MAC address in an Ethernet header of inner payload of an NVGRE packet |
| key nvgre src-ip2 dst-ip2 | Extract a source IP address and/or a destination IP address in an Ethernet header of inner payload of an NVGRE packet |
| key gtp teid | Extract a value of a "TEID" field |
| key nvgre src-ip2 dst-ip2 | Extract a source IP address and/or a destination IP address in an Ethernet header of inner payload of a GTP packet |

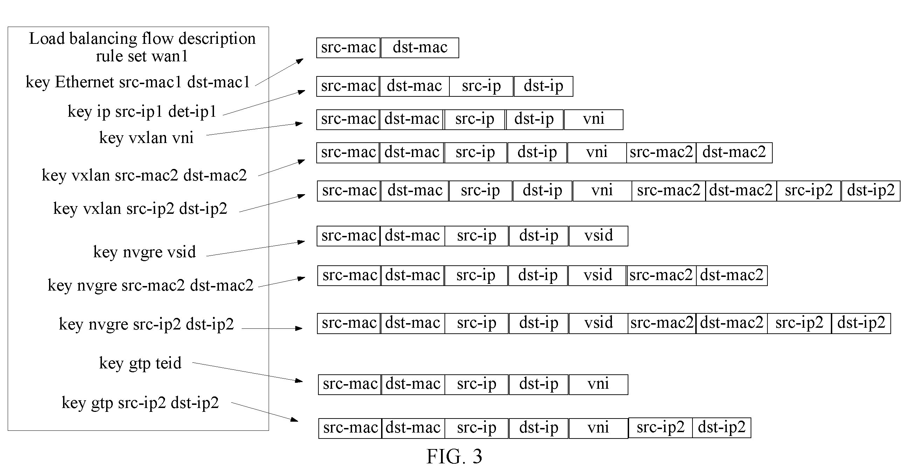

FIG. 3 is a schematic diagram of obtaining an input parameter according to a rule according to an embodiment of the present invention. As shown in FIG. 3, if the identifier of the packet header of the packet matches multiple rules of the foregoing ten rules, multiple sets of parameters are separately extracted from the packet header of the packet according to operation information in corresponding rules, where a quantity of sets of the extracted parameters is the same as a quantity of the rules to which the identifier of the packet header conforms, and the network device combines at least one set of the extracted parameters of the packet to obtain an input parameter.

For example, in FIG. 3, a first rule of a rule set "wan1" is "key Ethernet src-mac1 dst-mac1", that is, for an Ethernet packet, a source MAC address ("src-mac1") and a destination MAC address ("dst-mac1") are extracted as a parameter. In this case, if the packet conforms only to the first rule, that is, the packet is an Ethernet packet, the network device uses a source MAC address and a destination MAC address as a first parameter key1, and the network device determines key1 as the input parameter.

Further, a second rule is "key ip src-ip1 dst-ip1", that is, for an IP packet, a source IP address ("src-ip1") and a destination IP address ("dst-ip1") are extracted as a parameter. In this case, if the packet is an IP packet, a source IP address and a source IP address are extracted as a second parameter key2. If the packet conforms to both the first rule and the second rule, and the IP packet is carried on the Ethernet, the network device combines key1 and key2 to obtain the input parameter.

Further, a third rule is "key vxlan vni", that is, for a VXLAN packet, a value of a "VNI" field is extracted as a parameter. In this case, if the packet is a VXLAN packet, a value of a "VNI" field is extracted as a third parameter key3. If the packet conforms to all of the first rule, the second rule, and the third rule, because the VXLAN packet is a type of IP packet, and the IP packet is carried on the Ethernet, the network device combines key1, key2, and key3 to obtain the input parameter.

Further, a fourth rule is "key vxlan src-mac2 dst-mac2", that is, for a VXLAN packet, a source MAC address ("src-mac2") and a destination MAC address ("dst-mac2") in an Ethernet header of inner payload of the VXLAN packet are extracted as a parameter. In this case, if the packet is a VXLAN packet, a source MAC address and a destination MAC address in an Ethernet header of inner payload of the VXLAN packet are extracted as a fourth parameter key4. If the packet conforms to all of the first rule, the second rule, the third rule, and the fourth rule, because the VXLAN packet is a type of IP packet, and the IP packet is carried on the Ethernet, the network device combines key1, key2, key3, and key4 to obtain the input parameter.

Further, a fifth rule is "key vxlan src-ip2 dst-ip2", that is, for a VXLAN packet, a source IP address ("src-ip2") and a destination IP address ("dst-ip2") in an Ethernet header of inner payload of the VXLAN packet are extracted as a parameter. In this case, if the packet is a VXLAN packet, a source IP address and a destination IP address in an Ethernet header of inner payload of the VXLAN packet are extracted as a fifth parameter key5. If the packet conforms to all of the first rule, the second rule, the third rule, the fourth rule, and the fifth rule, because the VXLAN packet is a type of IP packet, and the IP packet is carried on the Ethernet, the network device combines key1, key2, key3, key4, and key5 to obtain the input parameter.

Further, a sixth rule is "key nvgre vsid", that is, for an NVGRE packet, a value of a "VSID" field is extracted as a parameter. In this case, if the packet is an NVGRE packet, a value of a "VSID" field is extracted as a sixth parameter key6. If the packet conforms to all of the first rule, the second rule, and the sixth rule, because the NVGRE packet is a type of IP packet, and the IP packet is carried on the Ethernet, the network device combines key1, key2, and key6 to obtain the input parameter.

Further, a seventh rule is "key nvgre src-mac2 dst-mac2", that is, for an NVGRE packet, a source MAC address ("src-mac2") and a destination MAC address ("dst-mac2") in an Ethernet header of inner payload of the NVGRE packet are extracted as a parameter. If the packet is an NVGRE packet, a source MAC address and a destination MAC address in an Ethernet header of inner payload of the NVGRE packet are extracted as a seventh parameter key7. If the packet conforms to all of the first rule, the second rule, the sixth rule, and the seventh rule, because the NVGRE packet is a type of IP packet, and the IP packet is carried on the Ethernet, the network device combines key1, key2, key6, and key7 to obtain the input parameter.

Further, an eighth rule is "key nvgre src-ip2 dst-ip2", that is, for an NVGRE packet, a source IP address ("src-ip2") and a destination IP address ("dst-ip2") in an Ethernet header of inner payload of the NVGRE packet are extracted as a parameter. If the packet is an NVGRE packet, a source IP address and a destination IP address in an Ethernet header of inner payload of the NVGRE packet are extracted as an eighth parameter key8. If the packet conforms to all of the first rule, the second rule, the sixth rule, the seventh rule, and the eighth rule, because the NVGRE packet is a type of IP packet, and the IP packet is carried on the Ethernet, the network device combines key1, key2, key6, key7, and key8 to obtain the input parameter.

Further, a ninth rule is "key gtp teid", that is, for a GTP packet, a value of a "TEID" field is extracted as a parameter. If the packet is a GTP packet, a value of a "TEID" field is extracted as a ninth parameter key9. If the packet conforms to all of the first rule, the second rule, and the ninth rule, because the GTP packet is a type of IP packet, and the IP packet is carried on the Ethernet, the network device combines key1, key2, and key9 to obtain the input parameter.

Further, a tenth rule is "key nvgre src-ip2 dst-ip2", that is, for a GTP packet, a source IP address ("src-ip2") and a destination IP address ("dst-ip2") in an Ethernet header of inner payload of the GTP packet are extracted as a parameter. In this case, if the packet is a GTP packet, a source IP address and a destination IP address in an Ethernet header of inner payload of the GTP packet are extracted as a tenth parameter key10. If the packet conforms to all of the first rule, the second rule, the ninth rule, and the tenth rule, because the GTP packet is a type of IP packet, and the IP packet is carried on the Ethernet, the network device combines key1, key2, key9, and key10 to obtain the input parameter.

In an actual application process, combining extracted parameters may be directly combining multiple obtained sets of parameters, so as to obtain the input parameter, or may be separately performing CRC processing or exclusive OR operation on sets of parameters to obtain the processed sets of parameters, and then combining the processed sets of parameters, so as to obtain the input parameter. A manner for combining parameters is not limited in this embodiment.

If the rule set is prestored in the second network device, the first network device may read the rule set from the second network device by accessing the second network device. For a specific process of generating an input parameter by the first network device after the first network device reads the rule set by accessing the second network device, reference may be made to the method described in any one of the foregoing embodiments, and details are not described herein again.

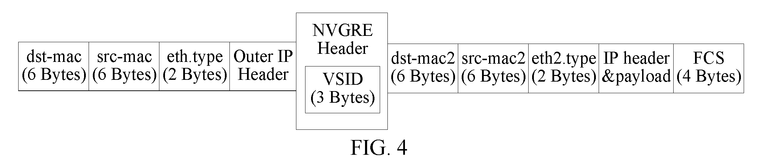

If the OSS delivers packet format definition to the network device, the network device identifies a format of a protocol packet according to the delivered packet format definition. An example of a user-defined packet format is shown in FIG. 4. FIG. 4 is a schematic diagram of a user-defined packet format according to an embodiment of the present invention. For example, offset.A.B is indicated in an Outer IP Header in FIG. 4, where specifically, offset.A.B means that: A indicates an A^{th} byte behind an Ethernet Type field, and B indicates continuous B bytes starting at the end of A. A process of identifying the user-defined packet format may be: First, if a value of an Ethernet header type field is 0x0800, determining is performed subsequently; otherwise, return, that is, determining is not performed subsequently. Second, if a field value of 1 byte starting at the end of a 10^{th} byte behind the Ethernet Type field is Ox2F (that is, a GRE packet), determining is performed subsequently; otherwise, return. Third, if a field value of 2 bytes starting at the end of a 23^{rd} byte behind the Ethernet Type field is 0 x 6558 (that is, an NVGRE packet), determining is performed subsequently; otherwise, return. Fourth, a field of 3 bytes starting at the end of a 25^{th} byte behind the Ethernet Type field is found, and a field value is obtained for a variable virtual subnet identifier (Virtual Subnet Identifier, VSID for short), and return. The method for generating an input parameter according to this embodiment is the same as that in the foregoing method embodiment, and is not described herein again.

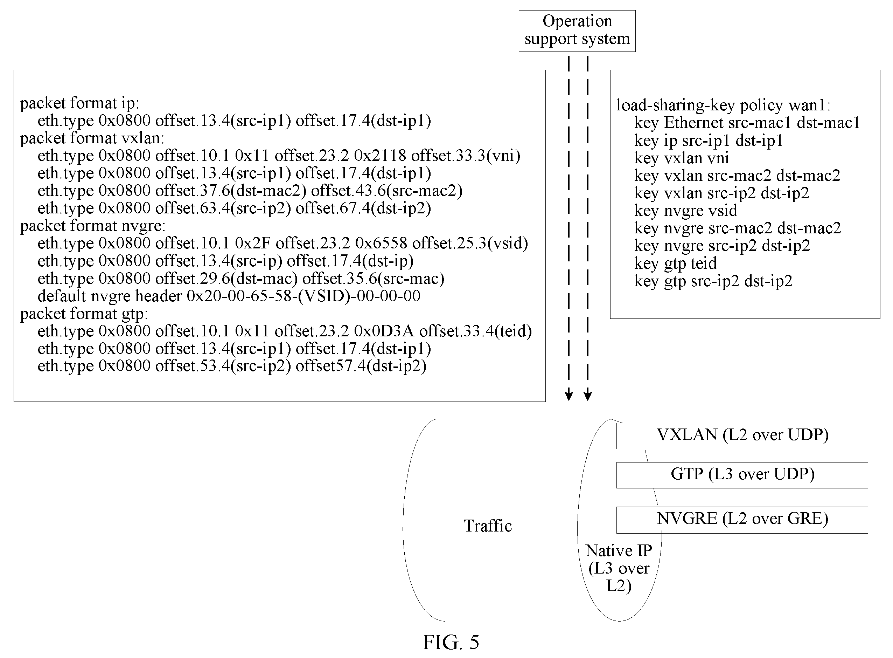

If the OSS configures the rule set for the network device, as shown in FIG. 5, FIG. 5 is a schematic diagram of configuring a rule set for a network device by an OSS according to an embodiment of the present invention. In the rule set, different packets are described by using at least one rule, each rule describes a single packet or a set of packets, for example, all packet flows over a VXLAN tunnel and all packet flows over an NVGRE tunnel, and then a configured rule is applied to a port of the network device.

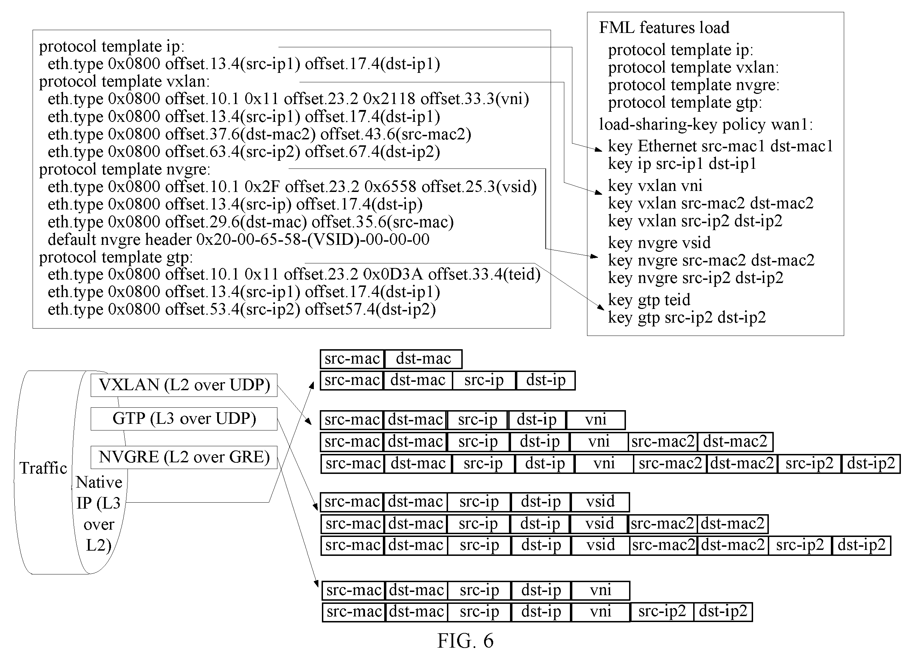

After the port of the network device to which the rule set is applied receives a packet, matching is performed between an identifier of a packet header of the packet and the foregoing ten rules. The identifier of the packet header of the packet may match any one of the foregoing ten rules, and then a set of parameters are extracted from the packet header of the packet according to operation information in the corresponding rule, and an input parameter is determined according to the extracted parameters; the identifier of the packet header of the packet may also match multiple rules of the foregoing ten rules, and then multiple sets of parameters are separately extracted from the packet header of the packet according to operation information in the corresponding rules, where a quantity of sets of the extracted parameters is the same as a quantity of the rules to which the identifier of the packet header conforms. The network device combines at least one set of the extracted parameters of the packet, to obtain an input parameter. As shown in FIG. 6, FIG. 6 is a schematic diagram of generating an input parameter according to a rule according to an embodiment of the present invention, and a processing method thereof is the same as that in the foregoing method embodiment, which is not described herein again.

According to the method for generating an input parameter provided in this embodiment, a network device receives a packet, extracts at least one set of parameters of the packet according to a preset rule set, and combines the at least one set of extracted parameter of the packet, to obtain a set of input parameters. In this way, the input parameters of the packet can be flexibly extracted, adapting to different packet formats when the input parameters are generated.

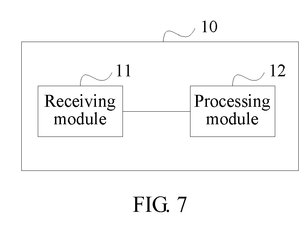

FIG. 7 is a schematic structural diagram of a network device 10 according to an embodiment of the present invention. The network device 10 in this embodiment may be the network device in the embodiment corresponding to FIG. 1. As shown in FIG. 7, the network device 10 provided in this embodiment may include a receiving module 11 and a processing module 12, where
the receiving module 11 is configured to receive a packet; and
the processing module 12 is configured to determine, according to an identifier of a first packet header in a rule set, whether the packet includes the first packet header, where the rule set includes a first rule, the first rule includes the identifier of the first packet header and first operation information, and the first operation information includes extracting a first parameter from the first packet header; extract the first parameter from the first packet when the packet includes the first packet header; and determine an input parameter according to the first parameter.

The processing module 12 may be specifically configured to determine the first parameter as the input parameter.

The network device 10 may further include a storage module, where the storage module is configured to store the rule set received by the receiving module 11.

The rule set may further include a second rule, the second rule includes an identifier of a second packet header and second operation information, and the second operation information includes extracting a second parameter from the second packet header; and correspondingly, the processing module 12 may be further configured to: determine, according to the identifier of the second packet header in the rule set, whether the packet includes the second packet header; and when the packet includes the second packet header, extract the second parameter from the second packet header, and combine the extracted first parameter and second parameter, so as to obtain the input parameter.

In a specific implementation process, the receiving module 11 receives a packet, and then the processing module 12 extracts at least one set of parameters of the packet according to a preset rule set. If an identifier of a packet header of the packet matches one of preset rules, the processing module 12 extracts a set of parameters from the packet header of the packet as an input parameter according to operation information in the corresponding rule; if an identifier of a packet header of the packet matches multiple rules of preset rules, the processing module 12 separately extracts multiple sets of parameters from the packet header of the packet according to operation information in the corresponding rules, where a quantity of sets of the extracted parameters is the same as a quantity of the rules to which the packet conforms.

The processing module 12 combines at least one set of the extracted parameters of the packet, for example, directly combines the sets of parameters, or separately performs CRC processing or exclusive OR operation on the sets of parameters, to obtain the processed multiple sets of parameters, and then combines the processed multiple sets of parameters to form a set of input parameters.

It should be noted that, functions of the receiving module 11 may be specifically implemented by a physical receiving port, functions of the processing module 12 may be specifically implemented by a processor, and functions of the storage module may be specifically implemented by a memory.

The network device provided in this embodiment can be configured to execute the technical solutions of the method embodiments, and the principles and technical effects of the network device and the technical solutions of the method embodiments are similar, which are not described herein again.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A method for generating an input parameter, comprising:
receiving, by a first network device, a packet;
determining, by the first network device according to an identifier of a first packet header in a rule set, whether the packet comprises the first packet header, wherein the rule set comprises a first rule, the first rule comprises the identifier of the first packet header and first operation information, and the first operation information comprises extracting a first parameter from the first packet header;
when the packet comprises the first packet header, extracting, by the first network device, the first parameter from the first packet header; and
determining, by the first network device, an input parameter according to the first parameter.

2. The method according to claim 1, wherein the rule set is stored in the first network device, or the rule set is stored in a second network device.

3. The method according to claim 2, wherein when the rule set is stored in the first network device, before the determining, by the first network device according to an identifier of a first packet header in a rule set, whether the packet comprises the first packet header, the method further comprises: receiving, by the first network device, the rule set from a third network device.

4. The method according to any one of claims 1 to 3, wherein the rule set further comprises a second rule, the second rule comprises an identifier of a second packet header and second operation information, and the second operation information comprises extracting a second parameter from the second packet header; and
the method further comprises:
determining, by the first network device according to the identifier of the second packet header in the rule set, whether the packet comprises the second packet header; and
when the packet comprises the second packet header, extracting, by the first network device, the second parameter from the second packet header.

5. The method according to claim 4, wherein the determining, by the first network device, an input parameter according to the first parameter comprises:
combining, by the first network device, the first parameter and the second parameter to obtain the input parameter.

6. The method according to any one of claims 1 to 3, wherein the determining, by the first network device, an input parameter according to the first parameter comprises:
determining, by the first network device, the first parameter as the input parameter.

7. A network device, comprising a receiving module and a processing module, wherein
the receiving module is configured to receive a packet; and
the processing module is configured to:
determine, according to an identifier of a first packet header in a rule set, whether the packet comprises the first packet header, wherein the rule set comprises a first rule, the first rule comprises the identifier of the first packet header and first operation information, and the first operation information comprises extracting a first parameter from the first packet header;
when the packet comprises the first packet header, extract the first parameter from the first packet header; and
determine an input parameter according to the first parameter.

8. The network device according to claim 7, further comprising:
a storage module, configured to store the rule set.

9. The network device according to claim 8, wherein the receiving module is further configured to receive the rule set.

10. The network device according to any one of claims 7 to 9, wherein the rule set further comprises a second rule, the second rule comprises an identifier of a second packet header and second operation information, and the second operation information comprises extracting a second parameter from the second packet header; and
the processing module is further configured to:
determine, according to the identifier of the second packet header in the rule set, whether the packet comprises the second packet header; and
when the packet comprises the second packet header, extract the second parameter from the second packet header.

11. The network device according to claim 10, wherein the processing module is specifically configured to:
combine the first parameter and the second parameter to obtain the input parameter.

12. The network device according to any one of claims 7 to 9, wherein the processing module is specifically configured to determine the first parameter as the input parameter.
